# EUROPEAN PATENT SPECIFICATION

(11) **EP 2 103 663 B1**
(45) Date of publication and mention of the grant of the patent: **08.04.2015**
(21) Application number: 09001410.1
(22) Date of filing: 02.02.2009
(51) Int. Cl.: C09J 5/06

(54) **Adhesion assembly method and apparatus**
Montageklebeverfahren und Vorrichtung
Procédé et appareil d'assemblage adhésif

(30) Priority: 21.03.2008 JP 2008073599
(43) Date of publication of application: 23.09.2009
(73) Proprietor: Mazda Motor Corporation, Aki-gun Hiroshima 730-8670 (JP)
(72) Inventor: Tanaka, Chikara, Aki-gun, Hiroshima 730-8670 (JP); Himuro, Katsuya, Aki-gun, Hiroshima 730-8670 (JP)
(74) Representative: Müller-Boré & Partner Patentanwälte PartG mbB

(56) References cited:
- EP-A1- 1 975 216
- EP-A1- 2 006 339
- DE-A1-102006 060 056
- DE-A1-102007 022 137

## Description

The present invention relates to an adhesion assembly method of an article, in which a plurality of members are joined with an adhesive agent having a chain-reacting curing reaction function that is disposed at joining portions of the members, thereby assembling the article.

In these days, an adhesion joining using an adhesive agent, in addition to a welding technology such as a spot welding or laser welding, has been used as joining means for efficiently increasing the rigidity of vehicle-body members to make the vehicle body lighter in an automobile assembling technology. For example, a weld-bond method using both the adhesive agent and the spot welding has been actually used to join the vehicle-body members at joining portions of their flanges which are formed at end portions of the members.

In this weld-bond method, the adhesive agent is applied to the joining portion of one of the vehicle-body members, a joining portion of another vehicle-body member is disposed so at to overlap the joining portion of the above-described one of the members, a temporary joining is provided by the spot welding applied to their joining portions with a pair of welding electrodes, then the adhesive agent is made cure in a paint-drying device. Herein, it may take some time for the adhesive agent to cure, so some additional assist means for temporally fixing, such as the spot welding, or fixing with rivets, may be necessary. This may require moving the guns of spot welding or the heads of striking rivets, so that the manufacturing time and costs would increase improperly.

In the meantime, there exists a quick-curing adhesive agent which cures quickly with application of a light or heat energy, such as ultraviolet rays or infrared rays. An ultraviolet-curing adhesive agent or an adhesive agent made from cyanoacrylate is known as a quick-curing adhesive agent. Recently, an adhesive agent having a chain-reacting curing reaction function is also known, which is disclosed in U.S. Patent No. 6,599,954, for example. In this adhesive agent having the chain-reacting curing reaction function, when some energy as a trigger energy is applied to this adhesive agent from outside, a heat energy of curing reaction is positively generated within the adhesive agent, and the curing reaction is further effected, like a chain reaction, by the heat energy of curing reaction to successively generate an additional heat energy of curing reaction, so that the adhesive agent can cure by means of these reaction heat energies.

Herein, the above-described adhesion joining with the ultraviolet-curing adhesive agent and the adhesive agent made from cyanoacrylate have respective problems in that a specified portion that is not exposed to ultraviolet rays may not cure and a tack time may be too short. Meanwhile, it may be important to ensure a stable, successive generation of the curing reaction heat for the above-described adhesive agent having the chain-reacting curing reaction function. For example, if the continuous application of the adhesive agent to the joining portion of the member was prevented due to the plugged nozzle for applying the adhesive agent or the reaction heat was let go away to an outside portion due to cooling by a clamp member or the like, there may occur a problem in that the curing-chain reaction of the adhesive agent would stop improperly.

In this case, since the adhesive agent could not cure properly to a terminal portion of a chain-reacting cure area, part of the adhesive agent around the terminal portion of the chain-reacting cure area would remain in a non-cure state. As a result, there may occur a problem in that the sufficient joining strength could not be obtained and thereby the joining portions would improperly separate from each other.

Document DE 10 2006 060 056 A1 discloses a method for joining of lightweight components by sticking for use in an automotive industry, a machine- and an aircraft construction. The method comprises applying inorganic and/or organic adhesives on surfaces to be joined and joining the surfaces. Immediately or after the application of the adhesives and the joining of the components, the sticking/joining surface is fixed through individual welding point and/or welded joint produced by means of laser welding, or is spot welded through several welding points and/or welded joints produced by means of remote laser. The hardening of the adhesive is continued and completed during the procedure of the cathode-dip lacquering or similar processes. The hardening of the adhesive takes place during the welding process or after the fusing via the heat entry of the laser. For fixing of the lightweight components, the laser spotwelds are statistically or regularly distributed over the adhesive surfaces or attached at the places of the largest load. Load-adapted welding seam geometry is produced by means of remote welding. An object of the present invention is to provide an adhesion assembly method of an article which can make the adhesive agent having the chain-reacting curing reaction function cure surely.

The object is solved by the adhesion assembly method of an article according to the present invention of the independent claim. Preferred embodiments of the present invention are subject of the dependent claims.

According to a first aspect of the present invention, there is provided an adhesion assembly method of an article, in which a plurality of members are joined with an adhesive agent having a chain-reacting curing reaction function that is disposed at joining portions of the members, thereby assembling the article, comprising a first adhesive-agent disposition step of disposing the adhesive agent at a joining portion of at least one of the members, a first trigger-application cure step of curing the adhesive agent disposed at the joining portion of at least one of the members by applying a first trigger energy for causing a chain-reacting curing reaction of the adhesive agent at a first specified point of the adhesive agent in a state in which a joining portion of another member at least partly overlaps the joining portion of the member at which the adhesive agent is disposed, thereby joining a pair of members, a second adhesive-agent disposition step of disposing the adhesive agent at a joining portion of a different member which is to be joined to the pair of members and/or a joining portion of the pair of members which is to be joined to the joining portion of the different member, and a second trigger-application cure step of curing the adhesive agent disposed at the joining portion of the different member and/or the joining portion of the pair of members by applying a second trigger energy for causing a chain-reacting curing reaction of the adhesive agent at a second specified point of the adhesive agent, thereby joining the different member to the pair of members, wherein the second specified point of the adhesive agent where the second trigger energy is applied is configured such that a terminal portion of a first chain-reacting cure area of the adhesive agent which is presumed to be generated by applying the first trigger energy to the adhesive agent of the pair of members at least partly overlaps a start portion of a second chain-reacting cure area of the adhesive agent which is to be generated by applying the second trigger energy to the adhesive agent between the pair of members and the different member, and wherein the first trigger energy and the second trigger energy are heat energy or light energy, wherein, if light energy is applied, a notch is formed at the respective joining portions through which the adhesive agent is exposed.

According to the adhesion assembly method of an article of the first aspect of the present invention, the adhesive agent having the chain-reacting curing reaction function is disposed at the joining portion of at least one of the members, and the energy as the first trigger energy is applied to the first specified point of the adhesive agent in the state in which the joining portion of another member overlaps the joining portion of the above-described member. Thereby, the energy of curing reaction is positively generated within the adhesive agent around the first specified point where the first trigger energy is applied, and this reaction energy further causes the curing reaction of part of the adhesive agent which is adjacent to this adhesive agent around the first specified point where the first trigger energy is applied, so that the curing reaction occurs in the adhesive agent like the chain reaction. Thus, the pair of members is joined at their joining portions.

Then, the adhesive agent is disposed at the joining portion of the different member which is to be joined to the pair of members and/or the joining portion of the pair of members which is to be joined to the joining portion of the different member, and the second trigger energy is applied to the second specified point of the adhesive agent, which is configured such that the terminal portion of the first chain-reacting cure area of the adhesive agent overlaps the start portion of the second chain-reacting cure area of the adhesive agent which is to be generated by applying the second trigger energy to the adhesive agent between the pair of members and the different member. Thereby, the curing reaction occurs in the adhesive agent at the second chain-reacting cure area of the adhesive agent as well like the chain reaction. Further, even if there exits part of the adhesive agent which remains in the non-cure state in the first chain-reacting cure area, this part of the adhesive agent of the first chain-reacting cure area can be surely made cure with the chain curing reaction from the terminal portion of the first chain-reacting cure area which is caused by the second trigger energy applied. Thus, both the adhesive agent disposed at the pair of members and the adhesive agent disposed between the pair of members and the different member can be made cure surely. Accordingly, the proper joining of the pair of the members and the different member can be provided.

According to an embodiment of the first aspect of the present invention, the first chain-reacting cure area comprises plural areas which are disposed substantially linearly on the joining portion of the member.

According to another embodiment of the first aspect of the present invention, the first specified point of the adhesive agent where the first trigger energy is applied is located substantially at a central portion of the first chain-reacting cure area. Thereby, the chain-reacting curing reaction of the first chain-reacting cure area can be made occur quickly and stably.

According to another embodiment of the first aspect of the present invention, the plural areas are configured to be chain-reacting cure areas of the adhesive agent which are presumed to be generated by applying the triggering energy to the adhesive agent.

According to another embodiment of the first aspect of the present invention, the second specified point of the adhesive agent where the second trigger energy is applied is located substantially at or near the terminal portion at both ends of the first chain-reacting cure area. Thereby, the performance of the present invention can be provided surely.

According to another embodiment of the first aspect of the present invention, an application thickness of the adhesive agent is in the range of 0.01 - 10 mm, and/or the application width is in the range of 1.0 - 30 mm.

According to an example, there is provided an adhesion assembly apparatus of an article, in which a plurality of members are joined with an adhesive agent having a chain-reacting curing reaction function that is disposed at joining portions of the members, thereby assembling the article, comprising a first trigger application means for applying a first trigger energy for causing a chain-reacting curing reaction of the adhesive agent, which is disposed at a joining portion of at least one of the members, at a first specified point of the adhesive agent in a state in which a joining portion of another member at least partly overlaps the joining portion of the member at which the adhesive agent is disposed, and a second trigger application means for applying a second trigger energy for causing a chain-reacting curing reaction of the adhesive agent, which is disposed at a joining portion of a different member which is to be joined to the pair of members and/or a joining portion of the pair of members which is to be joined to the joining portion of the different member, at a second specified point of the adhesive agent, wherein the second specified point of the adhesive agent where the second trigger energy is applied is configured such that a terminal portion of a first chain-reacting cure area of the adhesive agent which is presumed to be generated by applying the first trigger energy to the adhesive agent of the pair of members at least partly overlaps a start portion of a second chain-reacting cure area of the adhesive agent which is to be generated by applying the second trigger energy to the adhesive agent between the pair of members and the different member. According the example, substantially the same performance as the above-described first aspect of the present invention can be provided.

According to an embodiment of the example, the first chain-reacting cure area comprises plural areas which are disposed substantially linearly on the joining portion of the member.

According to another embodiment of the example, the first specified point of the adhesive agent where the first trigger energy is applied by the first trigger application means is located substantially at a central portion of the first chain-reacting cure area. Thereby, substantially the same advantages as the above-described embodiment of the first aspect of the present invention can be provided.

According to another embodiment of the example, the second specified point of the adhesive agent where the second trigger energy is applied by the second trigger application means is located substantially at said terminal portion at both ends of said first chain-reacting cure area. Thereby, substantially the same advantages as the above-described another embodiment of first aspect of the present invention can be provided.

According to another embodiment of the example, the first and second trigger application means are configured to apply the heat energy as the trigger energy. Thereby, substantially the same advantages as the above-described another embodiment of the first aspect of the present invention can be provided.

According to another embodiment of the example, an application thickness of the adhesive agent is in the range of 0.01 - 10 mm, and/or the application width is in the range of 1.0 - 30 mm.

Other features, aspects, and advantages of the present invention will become apparent from the following description which refers to the accompanying drawings. It should be understood that even though embodiments are separately described, single features thereof may be combined to additional embodiments.
FIG. **1** is a plan view of part of a vehicle-body member adhesion assembly line of an automotive vehicle.
FIG. **2** is a plan view of the rest of the vehicle-body member adhesion assembly line.
FIG. **3** is a perspective view showing a state of vehicle-body members which is before making them overlap each other.
FIG. **4** is a perspective view showing a state of the vehicle-body members which are joined at both joining portions with an adhesive agent and a first chain-reacting cure area.
FIG. **5** is a perspective view showing a state of a vehicle-body assembly member and a vehicle-body member which is before making them overlap each other and a second chain-reacting cure area of the vehicle body member.
FIG. **6** is a perspective view showing a state of the vehicle-body assembly member and the vehicle-body member which are joined at both joining portions with an adhesive agent.
FIG. **7** is an explanatory diagram showing a state in which a first trigger energy is applied to the joining portion of the vehicle-body member.
FIG. **8** is an explanatory diagram according to a modified embodiment, which corresponds to FIG. **7****.**
FIG. **9** is an explanatory diagram according to another modified embodiment, which corresponds to FIG. **7****.**

Hereinafter, preferred embodiments of the present invention will be described. The embodiments show an example in which an adhesion assembly method and apparatus of an article, in which a plurality of members are joined with an adhesive agent that is disposed at joining portions of the members, thereby assembling the article, is adopted to a vehicle-body member adhesion assembly line.

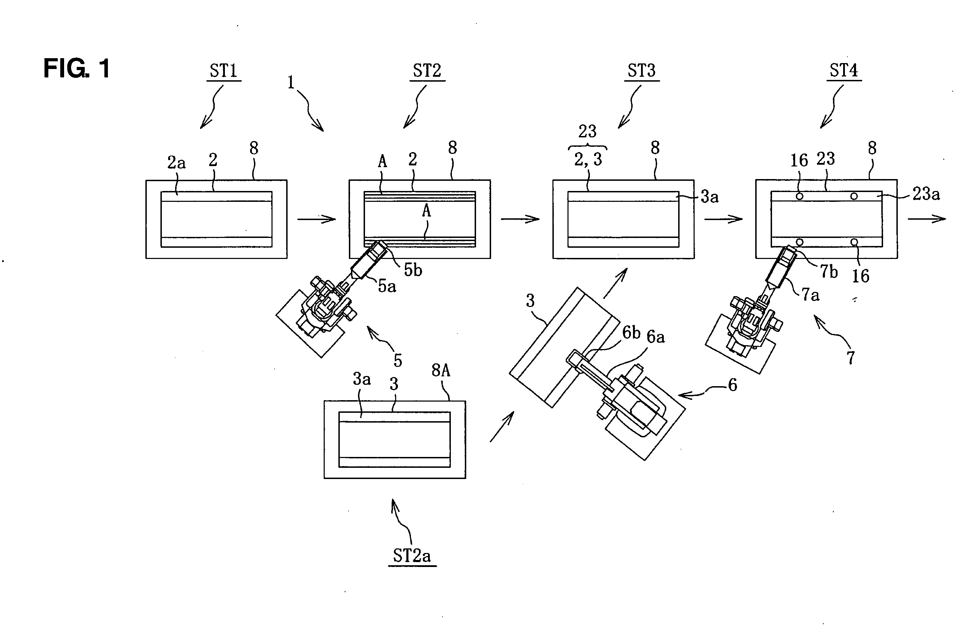

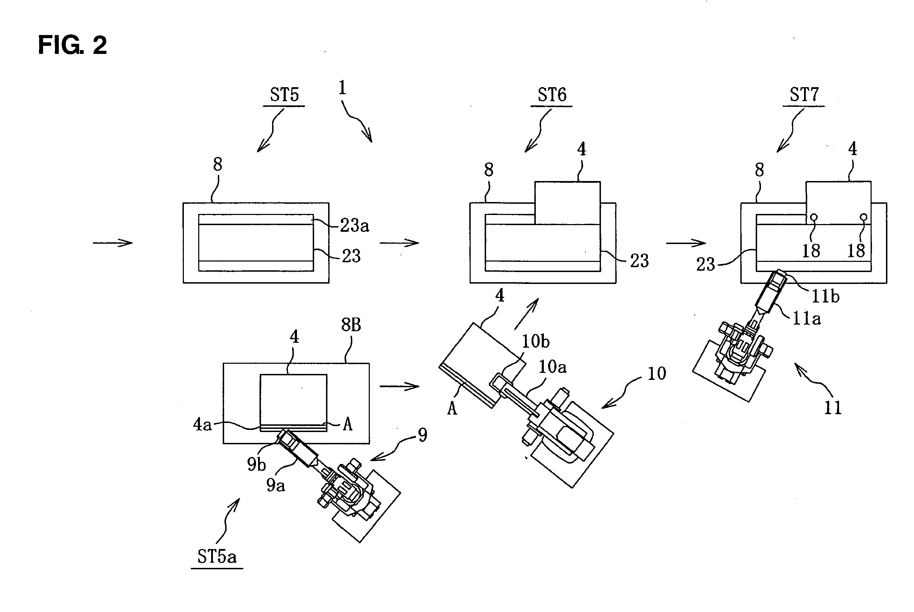

Hereinafter, an embodiment of the present invention will be described referring to the accompanying figures. As shown in FIGS. **1** and **2****,** in a vehicle-body member adhesion assembly line **1** of an automotive vehicle, at least one pair of vehicle-body members **2, 3** is to be joined with an adhesive agent **A** that is disposed at joining portions of the members **2, 3,** thereby at least partly assembling a vehicle-body assembly member **23.** Further, a joining portion **4a** of another vehicle-body member **4** which is different from the members **2, 3** is to be joined to a joining portion **23a** of the vehicle-body assembly member **23** with the adhesive agent **A.**

As shown in FIGS. **1** and **2****,** the vehicle-body member adhesion assembly line **1** is an assembly line to assemble various vehicle-body members which are associated to (particularly put into or onto or located on) pallets **8** on a conveyer. Reference character **STi** (i = 1, 2...) denotes each assembly station. The vehicle-body members **2, 3** to be assembled in the adhesion assembly line **1** exemplarily are a front frame inner and a front frame outer of a front frame of the automotive vehicle which is made of steel. The vehicle-body assembly member **23** which is at least partly made of the joined vehicle-body members **2, 3** is a front frame having a substantially closed cross section. A vehicle-body member **4** is a wheel apron, which is made of steel, to be joined to the front frame.

Reference character **ST1** denotes a station for putting the vehicle-body member **2** into or onto the pallet **8,** reference character **ST2** denotes a station for applying the adhesive agent **A** having a chain-reacting curing reaction function, which will be described in detail below, substantially to a joining portion **2a** (flange portion) of the vehicle-body member **2** with an adhesive-agent application robot **5,** reference character **ST2a** denotes a station for clamping the vehicle-body member **3** with a member carrying robot **6** to carry it from a movable (preferably self-moving) truck **8A,** reference character **ST3** denotes a station for assembling the vehicle-body member **3** to the vehicle-body member **2** on the pallet **8** with the member carrying robot **6,** and reference character **ST4** denotes a station for triggering a curing process particularly by applying a heat energy as a first trigger energy to at least part of the joining portion **23a** of the vehicle-body assembly member **23** with a first-trigger application robot **7** at one or more points, preferably at plural points.

Reference character **ST5** denotes a cure station for at least partly curing the adhesive agent **A** substantially at the joining portion **23a** of the vehicle-body assembly member **23,** reference character **ST5a** denotes an adhesive-agent application station for at least partly applying the adhesive agent **A** having the chain-reacting curing reaction function, which will be described below, to the joining portion **4a** of the vehicle-body member **4** on a truck **8B** with an adhesive-agent application robot **9,** reference character **ST6** denotes a station for assembling the vehicle-body member **4** to the vehicle-body assembly member **23** with the substantially closed cross section which is made of or comprises the joined vehicle-body members **2, 3** with a member carrying robot **10,** and reference character **ST7** denotes a station for triggering a further curing process (or continuing the curing process) particularly by applying the heat energy as the second trigger energy to the joining portion **23a** of the vehicle-body assembly member **23** and the joining portion **4a** of the vehicle-body member **4** with a second-trigger application robot **11** at one or more points, preferably at plural points.

The adhesive-agent application robot **5,** which particularly is a general multi-joint type of robot, is disposed at or close to the station **ST2.** An adhesive-agent application nozzle **5b** is attached to a hand or grip or mounting at or near the tip of an arm **5a** of the robot **5.** The adhesive-agent application nozzle **5b** is coupled to an adhesive-agent supply apparatus (not illustrated) to receive the pressurized adhesive agent **A** from the adhesive-agent supply apparatus, and applies the adhesive agent **A** to one or more, preferably to a pair of joining portions **2a** of the vehicle-body member **2.** A control unit of the adhesive-agent application robot **5,** the adhesive-agent supply apparatus and the adhesive-agent application nozzle **5b** are controlled preferably by a host controller (not illustrated).

The multi-joint type of carrying robot **6** is disposed between the stations **ST2a** and **ST3.** The carrying robot **6** clamps or grasps or mounts the vehicle-body member **3** on the truck **8A** preferably with a clamping jig **6b** attached to a hand or grip or mounting at or near the tip of its arm **6a,** and carries and assembles it or displaces it to the vehicle-body member **2** on the pallet **8** at the station **ST3** in a state in which the joining portions **2a, 3a** of the vehicle-body members **2, 3** at least partly contact each other. A control unit of the carrying robot **6** and the clamping jig **6b** are controlled preferably by the host controller (not illustrated).

The member carrying robot **6** is configured to move between its clamping position (first position) for clamping or grasping or mounting the vehicle-body member **3** held on the truck **8A** preferably with the clamping jig **6b** and its releasing position (second position) for releasing (the clamping of) the vehicle-body member **3** after carrying the member **3** to the station **ST3** and then assembling or placing it to the vehicle-body member **2** on the pallet **8.**

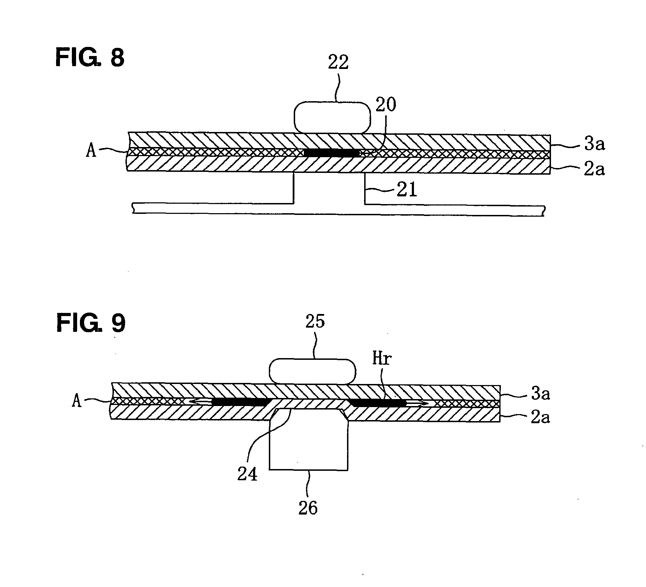

The first-trigger application robot **7,** which preferably is the general multi-joint type of robot, is provided at or near the station **ST4.** The robot **7** applies (preferably the heat energy as) the first trigger energy to the joining portions **2a, 3a** of the vehicle-body members **2, 3** at the one or more points, preferably at plural points and thereby makes the adhesive agent **A** cure or at least start curing. This robot **7** is configured to apply the heat energy **H** (the heat of about 100 degrees or higher, for example) (see FIG. **8****)** as the trigger energy to cause or initiate the chain-reacting curing reaction of the adhesive agent **A** at least partly disposed between the joining portions **2a, 3a** of the vehicle-body members **2, 3.**

A spot type of energy emitting portion **7b,** which preferably may comprise an electric heater or the like, is provided at a hand or grip or mount at or near the tip of an arm **7a** of the first-trigger application robot **7.** This robot **7** is configured to move between its energy application position (first position) for applying the trigger energy (preferably the heat energy **H)** to the joining portions **2a, 3a** of the vehicle-body members **2, 3** held or positioned on the pallet **8** with the energy emitting portion **7b** and its standby position (second position) which retreats or is displaced from the energy application position (first position). A control unit of the robot **7,** the electric heater and/or the energy emitting portion **7b** preferably are controlled by the host controller (not illustrated).

As shown in FIG. **2****,** an adhesive-agent application robot **9,** which may be similar to the adhesive-agent application robot **5,** is disposed at or near the station **ST5a.** An adhesive-agent application nozzle **9b** is attached to a hand or grip or mount at or near the tip of an arm **9a** of the robot **9.** The adhesive-agent application nozzle **9b** receives the adhesive agent **A** from the or a further adhesive-agent supply apparatus (not illustrated). A control unit of the adhesive-agent application robot **9,** the adhesive-agent supply apparatus and/or the adhesive-agent application nozzle **9b** preferably are controlled by the host controller (not illustrated).

Between the stations **ST5a** and **ST6** is disposed a carrying robot **10** which may be similar to the carrying robot **6.** This robot **10** clamps or grasps or mounts the vehicle-body member **4** on the truck **8B** preferably with a clamping jig **10b** attached to a hand or grip or mount at or near the tip of its arm **10a,** caries or displaces it to the station ST6 and assembles it to the vehicle-body assembly member 23 of the joined vehicle-body members 2, 3 on the pallet 8 preferably substantially in a state in which the respective joining portions 23a, 4a of the vehicle-body assembly member 23 and the vehicle-body member 4 at least partly contact each other. Herein, the adhesive agent A of the joining portion 4a is located between the joining portions 23a, 4a.

A second-trigger application robot 11, which may be similar to the first-trigger application robot 7, is provided at the station ST7. This robot 11 has a spot type of energy emitting portion 11b, which may comprise an electric heater or the like, at a hand or grip or mount at or near the tip of its arm 11a. The robot 11 applies (preferably the heat energy H) as the second trigger energy to at least part of the joining portions 23a, 4a of the vehicle-body assembly member 23 and the vehicle-body member 4 with the adhesive agent A at least partly disposed between the joining portions 23a, 4a.

Hereinafter, the adhesion assembly method of an article which assembles a vehicle-body block by joining the joining portions 2a, 3a, 4a of the plural vehicle-body members 2, 3, 4 with the adhesive agent A in the above-described adhesion assembly line 1 will be described in detail.

In a first adhesive-agent disposition step, as shown in FIG. 1, the adhesive agent A having the chain-reacting curing reaction function, which preferably is a liquid or flowable type, is at least partly applied to the joining portion 2a (flange portion) of the end portion of the vehicle-body member 2 by the adhesive-agent application robot 5 with the adhesive-agent application nozzle 5b particularly attached to its hand at the station ST2. The adhesive agent A having the chain-reacting curing reaction function preferably is a resin composition that primarily comprises a photopolymerizable resin (mainly, epoxy resin, and preferably alicyclic epoxy resin), a photo- and thermopolymerization initiator (e.g., aromatic sulfonium salt), and a photopolymerization initiator (e.g., sulfonium salt). Particularly, a chain-reacting curing reaction function may be used as disclosed in U.S. Patent No. 6,599,954. The adhesive thickness may preferably be 2.5 mm or more (e.g. particularly in the range of 2.5 to 5 mm).

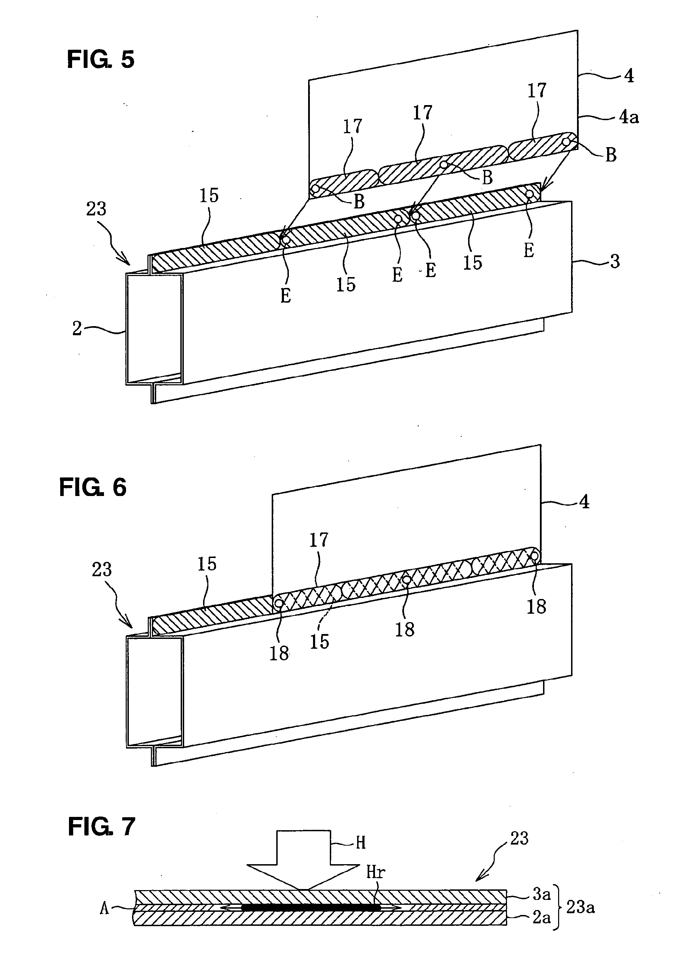

Herein, when this adhesive agent is exposed to energy radiation, such as ultraviolet radiation, electron beam, X-rays, infrared radiation, sunlight, visible light, laser beam (e.g., excimer laser, CO₂ laser), radiated heat rays, and/or other energy such as heat, a cation and a heat of curing reaction Hr (see FIG. **7****)** are positively generated within the resin composition of the adhesive agent, so that the resin composition of the adhesive agent is at least partly, preferably substantially fully cured by means of the reaction heat energies and/or the cation like a chain reaction. The application thickness of the adhesive agent **A** is preferably in the range of 0.01 - 10 mm, and/or the application width is preferably in the range of 1.0 - 30 mm. The curing conditions of the adhesive agent **A** are to radiate energy beams that can give an energy equivalent to a heat of 100 degrees centigrade or greater.

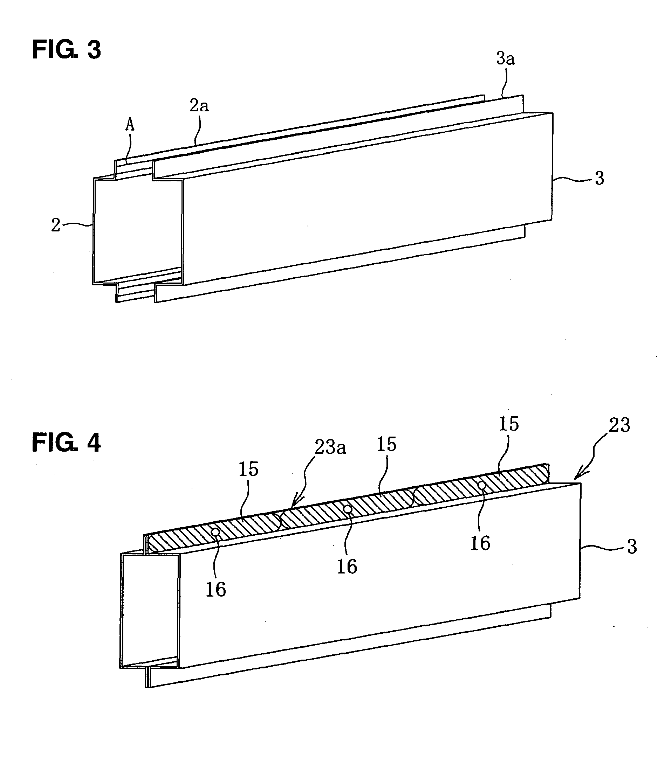

In the first adhesive-agent disposition step, as shown in FIGS. **3-5****,** the adhesive agent **A** is applied substantially continuously and/or linearly substantially along the longitudinal direction of the joining portion **2a** of the vehicle-body member **2.** It should be understood that the adhesive agent may be applied along any path such as a snake-like or otherwise bent or irregular path. This adhesive-agent application area preferably is split into plural areas, and these split areas are configured to be chain-reacting cure areas of the adhesive agent **A** which are presumed to be generated by applying the curing energy (preferably the heat energy **H)** to the adhesive agent **A.** That is, by dividing the above-described adhesive-agent application area by a specified (predetermined or predeterminable) distance which corresponds to the chain-reacting-cure progress distance of the adhesive agent **A** or less (100mm or less, for example), one or more, preferably a plurality of first chain-reacting cure areas **15** are provided (see the areas having slant lines in FIG. **4****).**

Next, in a first member assembly step, at the steps **ST2a** and **ST3,** the vehicle-body member **3** is carried or moved to the pallet **8** with the held vehicle-body member **2** by the member carrying robot **6** such that the joining portion **3a** of the vehicle-body member **3** at least partly overlaps the joining portion **2a** of the vehicle-body member **2** with the adhesive agent **A** applied as shown in FIG. **4****.**

Then, in a first trigger-application cure step, at the step **ST4,** the first trigger energy (preferably the heat energy **H** as the first trigger energy) is applied at plural points in a state in which the joining portions **2a, 3a** are overlapped, preferably by making the tip of the energy emitting portion **7b** of the first-trigger application robot **7** contact (or be closely located to) the outer face of the joining portion **3a** of the vehicle-body member **3.**

Herein, a first trigger-application point **16** is set at an intermediate portion (preferably substantially the central portion) of each first chain-reacting cure area **15** as shown in FIG. **4****.** As shown in FIG. **7****,** when the first trigger energy (preferably the heat energy **H**) is applied to the outer face of the joining portion **23a** from the trigger-application point **16,** it transmits to the adhesive agent **A** from the joining portion **23a,** thereby causing a curing reaction, preferably generating the cation and/or the heat of curing reaction **Hr,** at the first chain-reacting cure area **15** of the adhesive agent **A.** The heat of curing reaction **Hr** transmits in a direction of an arrow in FIG. **7****,** which causes the chain-reacting curing reaction. The heat energy preferably is applied to the outer face of the joining portion **23a** for a specified (predetermined or predeterminable) period of time and/or with a properly high temperature enough to cure the adhesive agent **A** particularly in accordance with the thickness and/or the tact or pitch of the joining portion **23a.**

Once the chain-reacting curing reaction starts, the adhesive agent **A** adjacent to the part of the adhesive agent **A** where the curing reaction heat generates is made cure (quickly or at an increased pace) and in the chain manner by the curing reaction heat **Hr.** This chain-reacting curing reaction progresses to the terminal portion of the first chain-reacting cure area **15.** That is, the joining portions **2a, 3a** of the vehicle-body members **2, 3** are joined quickly, so that the vehicle-body assembly member **23** with the substantially closed cross section is formed.

Herein, if the continuous application of the adhesive agent **A** to the joining portion **2a** was prevented due to the plugged adhesive-agent application nozzle **5b** for applying the adhesive agent or the curing reaction heat **Hr** was let go away to an outside portion due to cooling by something, there may occur a problem in that the curing-chain reaction of the adhesive agent would stop or be reduced improperly. As a result, part of the adhesive agent **A** after this stop area would not cure properly, particularly remaining in the non-cure state.

Next, in a second adhesive-agent disposition step at the station **ST5a** shown in FIG. **2****,** the adhesive agent **A** having the chain-reacting curing reaction function is applied to the joining portion **4a** of the vehicle-body member **4** on the truck **8B** by the adhesive-agent application robot **9.**

Then, as shown in FIG. **5****,** the adhesive agent **A** preferably is applied substantially continuously and/or substantially linearly to the joining portion **4a** of the vehicle-body member **4** which is to be joined to the joining portion **23a** of the vehicle-body assembly member **23.** It should be understood that the adhesive agent may be applied along any path such as a snake-like or otherwise bent or irregular path. This adhesive-agent application area preferably is split into plural areas, and these split areas are configured to be chain-reacting cure areas of the adhesive agent **A** which are presumed to be generated by applying the triggering energy (preferably the heat energy **H)** to the adhesive agent **A.** By dividing the above-described adhesive-agent application area by the specified (predetermined or predeterminable) distance which corresponds to the chain-reacting-cure progress distance of the adhesive agent **A** or less (about 100mm, for example), a plurality of second chain-reacting cure areas **17** are provided (see the areas having slant lines in FIG. **5****).**

Next, when the vehicle-body assembly member **23** is carried to the station **ST6,** the member carrying robot **10** carries the vehicle-body member **4** to the vehicle-body assembly member **23** on the pallet **8** such that the joining portion **4a** of the vehicle-body member **4** with the adhesive agent **A** applied at least partly overlaps the outer face (outside face in the vehicle width direction) of the joining portion **23a** of the vehicle-body assembly member **23.**

Herein, as shown in FIG. **5****,** the members are joined such that a terminal portion **E** of the first chain-reacting cure area **15** at least partly overlaps a start portion **B** of the second chain-reacting cure area **17.** In the second trigger-application cure step, as shown in FIG. **6****,** the tip of the energy emitting portion **11b** of the second-trigger application robot **11** is moved so as to contact or to be close to an overlap portion **18** of the terminal portion **E** and the start portion **B.** Thus, the second trigger energy (preferably the heat energy **H** as the second trigger energy) is applied at plural points. That is, in other words, the second trigger energy (preferably the heat energy **H** as the second trigger energy) is applied in such a manner that the terminal portion **E** of the first chain-reacting cure area **15** of the adhesive agent **A** which is presumed to be generated by applying the first trigger energy (preferably the heat energy **H** as the first trigger energy) to the adhesive agent **A** of the vehicle-body assembly member **23** at least partly overlaps the start portion **B** of the second chain-reacting cure area **17** of the adhesive agent **A** which is to be generated by applying the second trigger energy (preferably the heat energy **H** as the second trigger energy) to the adhesive agent **A** between the vehicle-body assembly member 23 and the vehicle-body member **4.**

When the heat energy **H** is applied to the above-described overlap portion **18,** it transmits to the adhesive agent **A** from the vehicle-body member **4** and also to the joining portion **23a** (joining portion which substantially corresponds to the terminal portion **E** at or near the both sides of the first chain-reacting cure area **15)** of the vehicle-body assembly member **23.** The heat energy **H** is applied to the overlap portion **18** for a specified (predetermined or predeterminable) period of time and/or with a properly high temperature enough to cure the adhesive agent **A** in accordance with the thickness and/or the tact or pitch of the overlap portion **18.**

In the second chain-reacting cure area **17,** the adhesive agent **A** is made cure by the heat energy **H** and thereby the cation and/or the curing reaction heat **Hr** are generated. The curing reaction heat **Hr** transmits to its adjacent part of the adhesive agent **A** and causes the chain-reacting curing reaction. Once this chain-reacting curing reaction starts, the adhesive agent **A** in the second chain-reacting cure area **17** is made cure (quickly) and in the chain manner by the curing reaction heat **Hr.**

Herein, the heat energy **H** as the preferred second trigger energy also transmits to the terminal portion **E** of the first chain-reacting cure area **15** at the joining portion **23a** of the vehicle-body assembly member **23** from the vehicle-body member **4.** Accordingly, even if the part of the adhesive agent **A** in the non-cure state had existed at the terminal portion **E** and/or its adjacent portion of the first chain-reacting cure area **15,** such part of the adjacent agent **A** receives the heat energy **H** from the vehicle-body member **4** which is applied from the energy emitting portion **11 b** of the second-trigger application robot **11** via the overlap portion **18,** so that the chain-reacting curing reaction of the adhesive agent **A** occurs in the first chain-reacting cure area **15** including the above-described part of the adhesive agent **A.**

That is, applying the heat energy **H** as the second trigger energy to the overlap portion **18** can make the adhesive agent **A** in the non-cure state cure surely or reliably. As a result, the joining portions **2a, 3a** of the vehicle-body members **2, 3** can be joined properly, and the joining portion **23a** of the vehicle-body assembly member **23** and the joining portion **4a** of the vehicle-body member **4** can be joined quickly, thereby assembling the article having the proper joining strength.

Next, the operation and advantages of the above-described joining assembly method and joining assembly line (corresponding to the joining assembly apparatus) of the article will be described. In case of assembling the vehicle-body assembly member **23** by joining the joining portions **2a, 3a** of the vehicle-body members **2, 3** with the adhesive agent **A** having the chain-reacting curing reaction function, the first trigger energy (preferably the heat energy **H** as the first trigger energy) is applied or transmitted to the joining portions **2a, 3a** at the intermediate portion (preferably substantially at the central portion) of the first chain-reacting cure area **15** with the first trigger-application robot **7** in the state in which the joining portion **2a** of the vehicle-body member **2** with the applied adhesive agent **A** at least partly overlaps the joining portion **3a** of the vehicle-body member **3.** The adhesive agent **A** is made cure by the heat energy **H** and thereby the cation and/or the curing reaction heat **Hr** are generated. The curing reaction heat **Hr** transmits to its adjacent part of the adhesive agent **A** and causes the chain-reacting curing reaction. Thus, the both joining portions **2a, 3a** of the vehicle-body members **2, 3** can be joined quickly.

The adhesive agent **A** having the chain-reacting curing reaction function is applied to the joining portion **4a** of the vehicle-body member **4,** and the joining portion **23a** of the vehicle-body assembly member **23** and the joining portion **4a** of the vehicle-body member **4** are joined with the adhesion. Herein, the second trigger energy (preferably the heat energy **H** as the second trigger energy) is applied to the overlap portions **18** with the second trigger-application robot **7** in such a manner that the terminal portion **E** of the first chain-reacting cure area **15** of the adhesive agent **A** which is presumed to be generated by applying the first trigger energy (preferably the heat energy **H** as the first trigger energy) to the adhesive agent **A** of the vehicle-body assembly member **23** at least partly overlaps or is close enough that the start portion **B** of the second chain-reacting cure area **17** of the adhesive agent **A** which is to be generated by applying the second trigger energy (preferably the heat energy **H** as the second trigger energy) to the adhesive agent **A** between the vehicle-body assembly member **23** and the vehicle-body member **4.** Accordingly, even if the part of the adhesive agent **A** in the non-cure state had existed at the terminal portion **E** or its adjacent portion of the joining portions **2a, 3a** of the vehicle-body members **2, 3,** such part of the adjacent agent **A** receives the heat energy **H** as the second trigger energy which has been applied for joining the joining portions **23a, 4a,** so that the chain-reacting curing reaction of the adhesive agent **A** occurs in this part of the adhesive agent **A,** thereby making the adhesive agent **A** in the first chain-reacting cure area **15** cure surely.

The plural first chain-reacting cure areas **15** preferably are disposed substantially linearly on the joining portions **2a, 3a** of the vehicle-body members **2, 3,** the first trigger-application robot **7** applies the heat energy **H** as the first trigger energy at the central portion of the first chain-reacting cure area **15.** Accordingly, the chain-reacting curing reaction of the first chain-reacting cure area **15** can be made occur quickly and/or stably.

Hereinafter, modified embodiments in which the above-described embodiment is partially modified will be described.
1) While the adhesive agent **A** having the chain-reacting curing reaction function is made cure by applying the heat energy **H** with the trigger-application robots **7, 11** in the above-described embodiment, a spacer **20** which is operative to control the thickness of the adhesive agent may be utilized as the trigger so that the adhesive agent **A** can be made cure by making the spacer generate the heat.
   In this modified embodiment, as shown in FIG. **8****,** when the joining portion **2a** of the vehicle-body member **2** with the applied adhesive agent **A** at least partly overlaps the joining portion **3a** of the vehicle-body member **3,** the above-described spacer **20,** which is made of a metal bar or the like, is disposed between the joining portions **2a, 3a** such that the both joining portions **2a, 3a** are clamped with a positioning jig 21 and a clamper **22.** Herein, the clamper **22** is configured to apply an energy (preferably to generate a heat), and the energy (preferably the generated heat) transmits to the spacer **20,** thereby starts the cure of the adhesive agent **A.**
2) A positioning jig **26** may be utilized as the trigger so that the adhesive agent **A** can be made cure by making this positioning jig apply the energy (preferably generate the heat). That is, as shown in FIG. **9****,** the joining portion **2a** of the vehicle-body member **2** is pressed so as to form a projection portion **24,** the vehicle-body member with the applied adhesive agent **A** and the joining portion **3a** of the vehicle-body member **3** are clamped with a clamper **25** and the positioning jig **26.** Herein, the positioning jig **26** which is located at the projection portion **24** preferably is configured to generate the heat, thereby generating the cation and/or the curing reaction heat **Hr** which causes the chain-reacting curing reaction of the adhesive agent **A.** Herein, the projection portion **24** may be formed by pressing the positioning jig **26** against the member.
3) While the adhesive agent **A** is applied to the joining portion **4a** of the vehicle-body member **4** (different member) to be joined to the joining portion **23a** of the vehicle-body assembly member **23** in the above-described embodiment, it may be applied to the joining portion **23a** of the vehicle-body assembly member **23,** then the joining portions **4a, 23a** of the vehicle-body member **4** and the vehicle-body assembly member **23** may be disposed so as to at least partly overlap each other.
4) While the heat energy **H** is applied as the trigger energy in the above-described embodiment, a light energy (ultraviolet rays, laser beam, etc.) may be applied. In this case, a notch is formed at the joining portion of the vehicle-body member, and the energy beam such as the ultraviolet rays or other electromagnetic waves may be directly or indirectly applied to the adhesive agent **A** having the chain-reacting curing reaction function which is exposed through the notch, thereby making the adhesive agent **A** cure.
5) While the liquid type of adhesive agent **A** is used in the above-descried embodiment, the kind of adhesive agent and its disposition manner may be changed in accordance with the kind of article to be assembled. For example, a solid and/or sheet type of adhesive agent may be used for a sheet type of member.
6) The adhesion assembly technology of an article according to the present invention is applicable to any manufacturing line of not only an automotive vehicle but an aircraft, railway vehicle and the like. The application should not be limited to a particular filed.
7) Any other modifications and improvements may be applied in the scope of of the following claims.

## Claims

1. An adhesion assembly method of an article, in which a plurality of members (2, 3, 4) are joined with an adhesive agent (A) having a chain-reacting curing reaction function that is disposed at joining portions (2a, 3a, 4a) of the members (2, 3, 4), thereby assembling the article, comprising:
a first adhesive-agent disposition step of disposing the adhesive agent (A) at a joining portion (2a) of at least one of the members (2); and
a first trigger-application cure step of curing said adhesive agent (A) disposed at the joining portion (2a) of at least one of the members (2) by applying a first trigger energy (H) for causing a chain-reacting curing reaction of the adhesive agent (A) at a first specified point (16) of the adhesive agent (A) in a state in which a joining portion (3a) of another member (3) at least partly overlaps the joining portion (2a) of said member (2) at which the adhesive agent (A) is disposed, thereby joining a pair of members (2, 3),
a second adhesive-agent disposition step of disposing the adhesive agent (A) at a joining portion (4a) of a different member (4) which is to be joined to said pair of members (2, 3) and/or a joining portion (23a) of said pair of members (2, 3) which is to be joined to the joining portion (4a) of the different member (4); and
a second trigger-application cure step of curing said adhesive agent (A) disposed at the joining portion (4a) of said different member (4) and/or the joining portion (23a) of said pair of members (2, 3) by applying a second trigger energy (H) for causing a chain-reacting curing reaction of the adhesive agent (A) at a second specified point (18) of the adhesive agent (A), thereby joining said different member (4) to said pair of members (2, 3),
wherein said second specified point (18) of the adhesive agent where the second trigger energy (H) is applied is configured such that a terminal portion (E) of a first chain-reacting cure area (15) of the adhesive agent (A) which is presumed to be generated by applying said first trigger energy (H) to the adhesive agent (A) of the pair of members (2, 3) at least partly overlaps a start portion (B) of a second chain-reacting cure area (17) of the adhesive agent (A) which is to be generated by applying said second trigger energy (H) to the adhesive agent (A) between the pair of members (2, 3) and the different member (4), and
wherein the first trigger energy (H) and the second trigger energy (H) are heat energy or light energy,
wherein, if light energy is applied, a notch is formed at the respective joining portions (2a, 3a, 4a) through which the adhesive agent (A) is exposed.

2. The adhesion assembly method of an article of claim 1, wherein said first chain-reacting cure area (15) comprises plural areas which are disposed substantially linearly on the joining portion (2a) of the member (2).

3. The adhesion assembly method of an article of claim 2, wherein said first specified point (16) of the adhesive agent (A) where the first trigger energy (H) is applied is located substantially at a central portion of the first chain-reacting cure area (15).

4. The adhesion assembly method of an article of claim 2 or 3, wherein the plural areas are configured to be chain-reacting cure areas of the adhesive agent (A) which are presumed to be generated by applying the triggering energy (H) to the adhesive agent (A).

5. The adhesion assembly method of an article of any one of the preceding claims, wherein said second specified point (18) of the adhesive agent (A) where the second trigger energy (H) is applied is located substantially at or near said terminal portion (B) at both ends of said first chain-reacting cure area (15).

6. The adhesion assembly method of an article of any one of the preceding claims, wherein an application thickness of the adhesive agent (A) is in the range of 0.01 - 10 mm, and/or the application width is in the range of 1.0 - 30 mm.

## Patentansprüche

1. Adhäsions- bzw. Klebefügeverfahren eines Artikels, bei dem eine Mehrzahl von Gliedern (2, 3, 4) mit einem Adhäsions- bzw. Klebemittel (A) verbunden werden, das eine kettenreagierende Aushärtungsreaktionsfunktion aufweist, die an Verbindungsabschnitten (2a, 3a, 4a) der Glieder (2, 3, 4) angeordnet bzw. bereitgestellt ist, wodurch der Artikel zusammengefügt wird, umfassend:
einen ersten Adhäsions- bzw. Klebemittelanordnungsschritt des Anordnens des Adhäsions- bzw. Klebemittels (A) an einem Verbindungsabschnitt (2a) zumindest eines der Glieder (2); und
einen ersten Triggerapplikationsaushärtungsschritt des Aushärtens des Adhäsions- bzw. Klebemittels (A), das an dem Verbindungsabschnitt (2a) des zumindest einen Glieds (2) angeordnet ist, durch Applizieren einer ersten Triggerenergie (H) zum Bewirken einer kettenreagierenden Aushärtungsreaktion des Adhäsions- bzw. Klebemittels (A) an einem ersten spezifizierten Punkt (16) des Adhäsions- bzw. Klebemittels (A) in einem Zustand, in dem ein Verbindungsabschnitt (3a) eines anderen Glieds (3) den Verbindungsabschnitt (2a) des Glieds (2) zumindest teilweise überlappt, an dem das Adhäsions- bzw. Klebemittel (A) angeordnet ist, wodurch ein Paar Glieder (2, 3) verbunden wird,
einen zweiten Adhäsions- bzw. Klebemittelanordnungsschritt des Anordnens des Adhäsions- bzw. Klebemittels (A) an einem Verbindungsabschnitt (4a) eines unterschiedlichen bzw. anderen Glied (4), das mit dem Paar Glieder (2, 3) zu verbinden ist, und/oder einem Verbindungsabschnitt (23a) des Paars Glieder (2, 3), der mit dem Verbindungsabschnitt (4a) des unterschiedlichen Glieds (4) zu verbinden ist; und
einen zweiten Triggerapplikationsaushärtungsschritt des Aushärtens des Adhäsions- bzw. Klebemittels (A), das an dem Verbindungsabschnitt (4a) des unterschiedlichen Glieds (4) und/oder dem Verbindungsabschnitt (23a) des Paars Glieder (2, 3) angeordnet ist, durch Applizieren einer zweiten Triggerenergie (H) zum Bewirken einer kettenreagierenden Aushärtungsreaktion des Adhäsions- bzw. Klebemittels (A) an einem zweiten spezifizierten Punkt (18) des Adhäsions- bzw. Klebemittels (A), wodurch das unterschiedliche Glied (4) mit dem Paar Glieder (2, 3) verbunden wird,
wobei der zweite spezifizierte Punkt (18) des Adhäsions- bzw. Klebemittels, wo die zweite Triggerenergie (H) appliziert wird, so konfiguriert ist, dass ein Anschlussabschnitt (E) des ersten kettenreagierenden Aushärtungsbereichs (15) des Adhäsions- bzw. Klebemittels (A), von dem vermutet wird, dass er durch Applizieren der ersten Triggerenergie (H) an dem Adhäsions- bzw. Klebemittel (A) des Paars Glieder (2, 3) erzeugt wird, einen Startabschnitt (B) eines zweiten kettenreagierenden Aushärtungsbereichs (17) des Adhäsions- bzw. Klebemittels (A) zumindest teilweise überlappt, der durch Applizieren der zweiten Triggerenergie (H) an dem Adhäsions- bzw. Klebemittel (A) zwischen dem Paar Gliedern (2, 3) und dem unterschiedlichen Glied (4) zu erzeugen ist, und
wobei die erste Triggerenergie (H) und die zweite Triggerenergie (H) Wärmeenergie oder Lichtenergie sind,
wobei, falls Lichtenergie appliziert wird, eine Kerbe an den jeweiligen Verbindungsabschnitten (2a, 3a, 4a) gebildet wird, durch die das Adhäsions- bzw. Klebemittel (A) freigelegt wird.

2. Adhäsions- bzw. Klebefügeverfahren eines Artikels nach Anspruch 1, wobei der ersten kettenreagierende Aushärtungsbereich (15) mehrere Bereiche umfasst, die im Wesentlichen linear an dem Verbindungsabschnitt (2a) des Glieds (2) angeordnet sind.

3. Adhäsions- bzw. Klebefügeverfahren eines Artikels nach Anspruch 2, wobei der erste spezifizierte Punkt (16) des Klebemittels (A), wo die erste Triggerenergie (H) appliziert wird, im Wesentlichen an einem zentralen Abschnitt des ersten kettenreagierenden Aushärtungsbereichs (15) angeordnet ist.

4. Adhäsions- bzw. Klebefügeverfahren eines Artikels nach 2 oder 3, wobei die mehreren Bereiche konfiguriert sind, kettenreagierende Aushärtungsbereiche des Klebemittels (A) zu sein, von denen vermutet wird, dass sie durch Applizieren der Triggerenergie (H) an dem Klebemittel (A) erzeugt werden.

5. Adhäsions- bzw. Klebefügeverfahren eines Artikels nach einem der vorhergehenden Ansprüche, wobei der zweite spezifizierte Punkt (18) des Klebemittels (A), wo die zweite Triggerenergie (H) appliziert wird, im Wesentlichen an dem oder nahe des Anschlussabschnitts (B) an beiden Enden des ersten kettenreagierenden Aushärtungsbereichs (15) angeordnet ist.

6. Adhäsions- bzw. Klebefügeverfahren eines Artikels nach einem der vorhergehenden Ansprüche, wobei eine Applikationsdicke des Klebemittels (A) in dem Bereich von 0,01 - 10 mm liegt und/oder die Applikationsbreite in dem Bereich von 1,0 - 30 mm liegt.

## Revendications

1. Procédé d'assemblage par adhésion d'un article, dans lequel une pluralité d'éléments (2, 3, 4) sont reliés avec un agent adhésif (A) ayant une fonction de réaction de durcissement à réaction en chaîne qui est disposé au niveau de portions de liaison (2a, 3a, 4a) des éléments (2, 3, 4), assemblant de ce fait l'article, comprenant :
une première étape de disposition d'agent adhésif consistant à disposer l'agent adhésif (A) au niveau d'une portion de liaison (2a) d'au moins un des éléments (2) ; et
une première étape de durcissement à application de déclenchement consistant à durcir ledit agent adhésif (A) disposé au niveau de la portion de liaison (2a) d'au moins un des éléments (2) en appliquant une première énergie de déclenchement (H) pour provoquer une réaction de durcissement à réaction en chaîne de l'agent adhésif (A) au niveau d'un premier point spécifié (16) de l'agent adhésif (A) dans un état dans lequel une portion de liaison (3a) d'un autre élément (3) chevauche au moins partiellement la portion de liaison (2a) dudit élément (2) au niveau de laquelle l'agent adhésif (A) est disposé, reliant de ce fait une paire d'éléments (2, 3),
une seconde étape de disposition d'agent adhésif consistant à disposer l'agent adhésif (A) au niveau d'une portion de liaison (4a) d'un élément différent (4) qui doit être relié à ladite paire d'éléments (2, 3) et/ou d'une portion de liaison (23a) de ladite paire d'éléments (2, 3) qui doit être reliée à la portion de liaison (4a) de l'élément différent (4) ; et
une seconde étape de durcissement à application de déclenchement consistant à durcir ledit agent adhésif (A) disposé au niveau de la portion de liaison (4a) dudit élément différent (4) et/ou de la portion de liaison (23a) de ladite paire d'éléments (2, 3) en appliquant une seconde énergie de déclenchement (H) pour provoquer une réaction de durcissement à réaction en chaîne de l'agent adhésif (A) au niveau d'un second point spécifié (18) de l'agent adhésif (A), reliant de ce fait ladite élément différent (4) à ladite paire d'éléments (2, 3),
dans lequel ledit second point spécifié (18) de l'agent adhésif où la seconde énergie de déclenchement (H) est appliquée est configuré de sorte qu'une portion terminale (E) d'une première zone de durcissement à réaction en chaîne (15) de l'agent adhésif (A) qui est supposée être générée en appliquant ladite première énergie de déclenchement (H) à l'agent adhésif (A) de la paire d'éléments (2, 3) chevauche au moins partiellement une portion de démarrage (B) d'une seconde zone de durcissement à réaction en chaîne (17) de l'agent adhésif (A) qui doit être générée en appliquant ladite seconde énergie de déclenchement (H) à l'agent adhésif (A) entre la paire d'éléments (2, 3) et l'élément différent (4), et
dans lequel la première énergie de déclenchement (H) et la seconde énergie de déclenchement (H) sont de l'énergie thermique ou de l'énergie lumineuse,
dans lequel, si de l'énergie lumineuse est appliquée, une encoche est formée au niveau des portions de liaison respectives (2a, 3a, 4a) à travers laquelle l'agent adhésif (A) est exposé.

2. Procédé d'assemblage par adhésion d'un article selon la revendication 1, dans lequel ladite première zone de durcissement à réaction en chaîne (15) comprend une pluralité de zones qui sont disposées essentiellement linéairement sur la portion de liaison (2a) de l'élément (2).

3. Procédé d'assemblage par adhésion d'un article selon la revendication 2, dans lequel ledit premier point spécifié (16) de l'agent adhésif (A) où la première énergie de déclenchement (H) est appliquée est situé essentiellement au niveau d'une portion centrale de la première zone de durcissement à réaction en chaîne (15).

4. Procédé d'assemblage par adhésion d'un article selon la revendication 2 ou 3, dans lequel la pluralité de zones sont configurées pour être des zones de durcissement à réaction en chaîne de l'agent adhésif (A) qui sont supposées être générées en appliquant l'énergie de déclenchement (H) à l'agent adhésif (A).

5. Procédé d'assemblage par adhésion d'un article selon l'une quelconque des revendications précédentes, dans lequel ledit second point spécifié (18) de l'agent adhésif (A) où la seconde énergie de déclenchement (H) est appliquée est situé essentiellement au niveau ou près de ladite portion terminale (B) aux deux extrémités de ladite première zone de durcissement à réaction en chaîne (15).

6. Procédé d'assemblage par adhésion d'un article selon l'une quelconque des revendications précédentes, dans lequel une épaisseur d'application de l'agent adhésif (A) est dans la plage de 0,01 à 10 mm et/ou la largeur d'application est dans la plage de 1,0 à 30 mm.
